Europäisches Patentamt

European Patent Office

Office européen des brevets

(11) Publication number: **0 053 205**
**A1**

## (12) EUROPEAN PATENT APPLICATION

(21) Application number: **80304225.8**

(22) Date of filing: **25.11.80**

(51) Int. Cl.³: **G 01 P 1/08,** G 01 D 1/16, G 01 F 9/02

(43) Date of publication of application: **09.06.82** **Bulletin 82/23**

(84) Designated Contracting States: **AT BE CH DE FR GB IT LI LU NL SE**

(71) Applicant: **Közuti Közlekedési Tudományos Kutato Intézet, Thán Károly u. 3-5, Budapest 1119 (HU)**

(72) Inventor: **Böhm, Nándor, Damjanich utca 54, Budapest, 1071 (HU)**
Inventor: **Böhm, János, Zalai ut, 1/c, Budapest 1125 (HU)**
Inventor: **Böhm, Róbert, Piroska utca 9, Budapest 1016 (HU)**

(74) Representative: **Gold, Tibor Zoltán et al, T.Z.GOLD & COMPANY 9, Staple Inn, London WC1V 7QH (GB)**

(54) Instrument for measuring the speed and fuel consumption of motor vehicles.

(57) The invention relates to an instrument for measuring the speed and fuel consumption of motor vehicles.

The device (7) measuring the consumed fuel in its through-flow has a logarithmically graduated scale (8) which moves along the logarithmically graduated speed indicating scale (28a) and this way it shows the index numbers of the speed and fuel consumption at the same time. The pointer (23) showing the vehicle speed moves over these two scales (8, 28a) indicating and making readable the index number of the fuel consumption corresponding to the speed (e.g. km/h) on the two scales (8, 28a).

The specific weight (38) of the consumed fuel can be set, furthermore the thermostat in the measuring device (7) senses the temperature and viscosity of the fuel to be consumed, as well as their variations, and the flow cross-section of the fuel is controlled accordingly. The instrument is provided with a light and/or sound signal device (42) indicating the optimal, low or excess consumption of the fuel.

– 1 –

# INSTRUMENT FOR MEASURING THE SPEED AND FUEL CONSUMPTION OF MOTOR VEHICLES

The invention relates to an instrument for measuring the speed and fuel consumption of motor vehicles, provided with a speedometer actuated with coil spring of logarithmic characteristic curve and logarithmically graduated speedometer scale, furthermore it has a device measuring the consumed fuel in its through-flow, the amount of which is shown by the logarithmically graduated scale moving along the speedometer scale. The two scales moving along each other jointly show the index numbers of the speed and fuel consumption, while the travelling speed of the vehicle is indicated by the speed pointer of the speedometer moving over the figures, at the same time showing also the index numbers of the fuel consumption corresponding to the indicated speed index numbers /e.g. km/hour/ and thus with the aid of the logarithmic scale the instrument functioning as a slide rule continupusly evaluates and shows the variations of the interdependent data of speed and consumption. The instrument has adjustment facilities /e.g. specific weight of fuel/ increasing the functional and measuring accuracy, furthermore it has an indicator device related to the consumption.

The economical operation of the internal combustion engine and motor vehicles is based on the economic fuel consumption measurement and control. The measurement shall be such as to enable the driver of the motor vehicle to operate the vehicle economically according to the existing load and road conditions.

No suitable instrument has existed for this purpose so far, although the internal combustion engines and motor vehicles have been known for about a century. Under the present conditions the factories or workshops carrying out general overhaul, check the motors with test and take up a g/hour Hp diagram from the consumption varying according to the load and speed, which are prepared mostly for the max. load, but still under idealized conditions, thus serving only the informatory or measurement-control purpose of the specialists.

These are useless for the operators of the motors and for drivers of the motor vehicles.

Further drawback for the operators is that

0053205

certain manufacturers - in order to promote the
business interests - put the motor vehicles and
motors on the market set to a supercharged performance, whereby they can promote and introduce
vehicles with higher speed, acceleration and with
more favourable properties against the competition,
which however represent about 20 % excess consumption.

In the course of running, the instruments
known and available so far - generally being of
measuring system - are suitable only for measuring the amount of fuel calculated to volume or
weight consumed on a distance of definite length
e.g. 10 or 100 km, or within a unit of time, e.g.
per hour. Furthermore such electrical fuel gauge
is also known, which connected before the car-
buretter or injector of the motor, indicates
the amount of fuel on its counter and shows the
fuel consumption of the motor in time or during
the distance travelled by the vehicle, by summing
up on the counter roll, or recording on a diagram
tape. Due to its simple measurement and minor inaccuracy, this latter one is more favourable
at the instruments with measuring tank system, but
none of the mentioned instruments is suitable

0053205

for realizing the objective of the invention.

In lack of instrument, only the average consumption can be measured with the kilometre counter, or with the known instruments, which due to the many influencing circumstances, such as driving in city, on highway, flat or mountaneus road conditions, quality of driving, frequent starting, stopping, idle running, slow speed, high speed, etc.- give not even approximately realistic value.

Driving of the motor vehicles at low or high speed may result in excess consumption even at identical road conditions and distance, while there is an optimal speed - varying according to the vehicle type and the individual driver - at which the fuel consumption of the vehicle is the most favourable. The instrument according to the invention is suitable for this purpose and by its use the driver is capable to run its vehicle at the optimally economic fuel consumption.

The instrument according to the invention is realized with the combined operation of two instrument units essentially of novel solution by themselves, in which one unit measures the vehicle speed with a coil spring of logarithmic characteristic curve and shows the speed of the vehicle on a logarithmically graduated scale, while the other instrument unit measures the amount of consumed fuel showing it on a logarithmically graduated scale fitted onto a rotary disc. The logarithmically graduated disc showing the amount of fuel moves or turns along a scale showing the speed values with reciprocal logarithmic scale division and the kilometre counter turning over the two scale divisions will show the travelling speed of the vehicle together with the consumed amount of fuel corresponding to the speed.

The initial measuring position of the graduated rotary disc showing the amount of fuel is adjustable with correction according to the specific weight of the fuel to be used.

Between the wheel of kilometre counter and rotary disc of the fuel gauge a rolling wheel actuated with circulating motion is used as a differential wheel, which by its progress or backward rolling according to the rotary speed difference of the two discs switches on the circuit of an incandescent lamp of varying colour and shows the excess speed or under consumption, or in bet-

0053205

.ween the correct speed pertinent to the optimal consumption. Further reduction of the speed and increase of the consumption are indicated by a lamp of different colour.

The disc showing the consumed amount of fuel is concentric with the pointer of the speedometer and since the consumtion is calculated in litre/km, reciprocal scale is used. This way the pointer of the instrument shows not only the speed of the vehicle, but also the existing consumption for 100 km, on the rotary disc measuring the reciprocal consumtion. The consumption per hour can also be read off under the 100 km mark on the instrument.

The accuracy is increased by the initial correction of the scale measuring the consumption, whereby at stationary motor when the fuel is filled in, the scale division is set to the specific weight value with the aid of an externally controlled adjusting button. Values of the specific weight are shown on the pushbutton, which can be set to litre, or kp at will.

In the embodiment of the example both scales of the instrument are logarithmically graduated to 100, thus the speedometer will measure accurately

up to 200 km. In order to take a large scale -
because of the 120° measurement - the speed measurement starts with 5 km/h, since the measurement
of lower speed is not necessary. The upper limit
of the fuel gauge was taken to 100 l/h in order
to meet the consumption that may occur in
practice, furthermore because of the 120° measurement limit, the swing was reduced to 40 l/h. Na-
turally in addition to the solution of the example
the measuring limits can be extended as desired,
and the accurate reading of the scale can also be
increased for instance with a suitably used mag-
nifier.

In order that the driver should be able to
observe the operation of the instrument without
affecting the driving and deviating the attention,
a light signal automaton is built into the instrument. This functions in such a way  that when
the speed of the vehicle is above the optimal
consumption, then the internal or external lamp
of the instrument will emit green light. When the
optimal or lowest consumption for 100 km is
reached, its colour signal will change over to
white.In excess of this the red lamp lights up.
A lamp will be alight showing always only a single colour. This automatic switch however can be used not only in this instrument, but due to its functional capacity of indicating the optimal positions of function with two or more variables, it has extremely wide field of utilisation, e.g. in the field of automation. Actuator of the light signal lamps is such a current switch, which electrically switches the relative speed variation of the two independent rotary discs. The two discs may substitute the two coordinates of the diagram and thus a change of turn occurs at the extreme values of the diagram, which is indicated by the low-resistant rolling, friction bevel wheel via turn of switch.

This way the instrument serves as a guide for the driver to adjust the speed and consumption economically without reading the numerical consumption.

By conversion of the logarithmic coil spring and forming a suitable scale, the instrument can be converted from the CGS unit-system to the scale of another unit system. The speedometer can be easily adjusted and the mile/gallon consumption scale - besides the scale variation - can be substituted with non-reciprocal scale.

0053205

The instrument according to the invention is described in detail by way of example with reference to the enclosed drawings, as follows:

Figure 1: section of the instrument housing along its centreline, arrangement of the structural parts, and partly its sectional view,

Figure 2: detail showing the speedometer;

Figure 3: plan view of the graduated discs of the measuring devices from the direction of the removed cover of the instrument housing,

Figure 4: section of the scale adjusting device,

Figure 5 and 6: section and side view of the journalling (bedding) of the instrument's rotary discs;

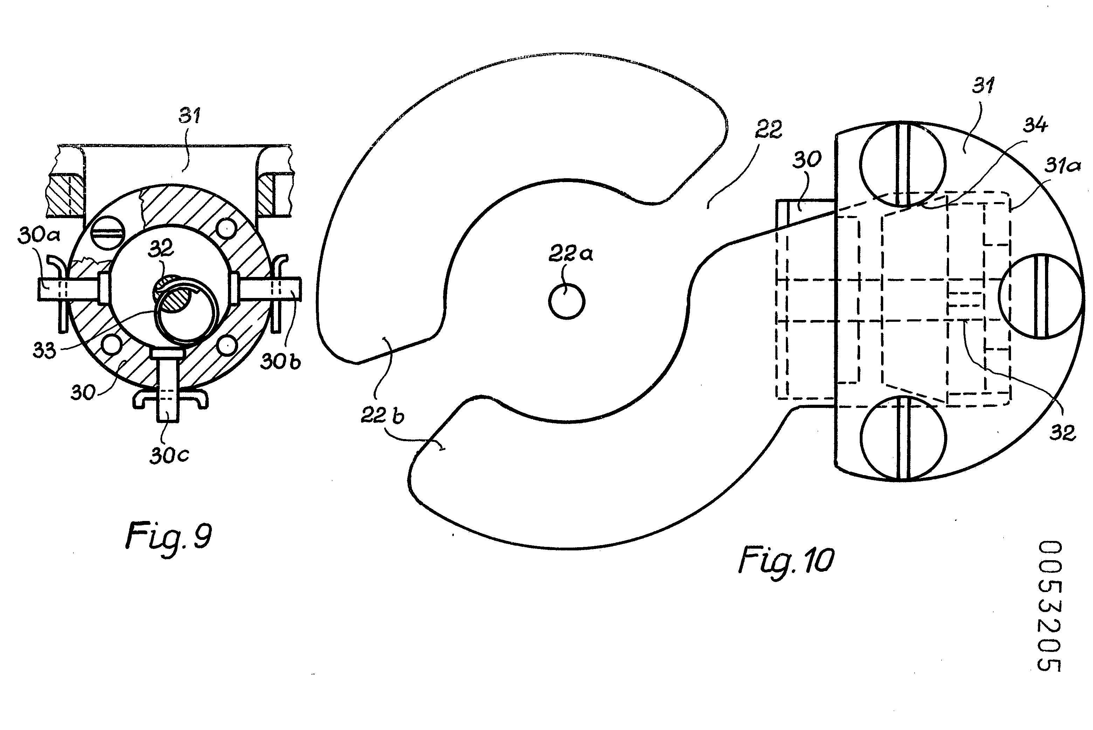

Figures 7, 8, 9, and 10: enlarged view of part A shown in Fig.1., the sectional view is shown in Fig.7, side view from the right in Fig.8., partly view and partly section from the left in Fig.9., and plan view in Fig.10.

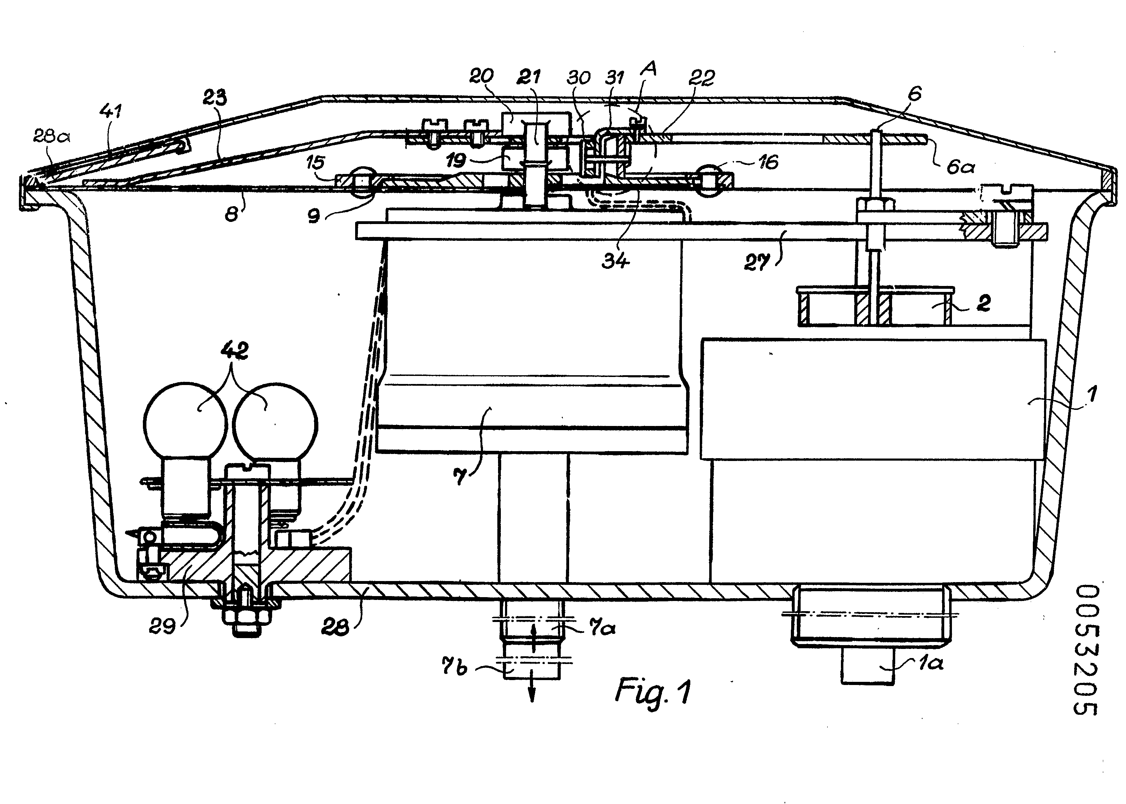

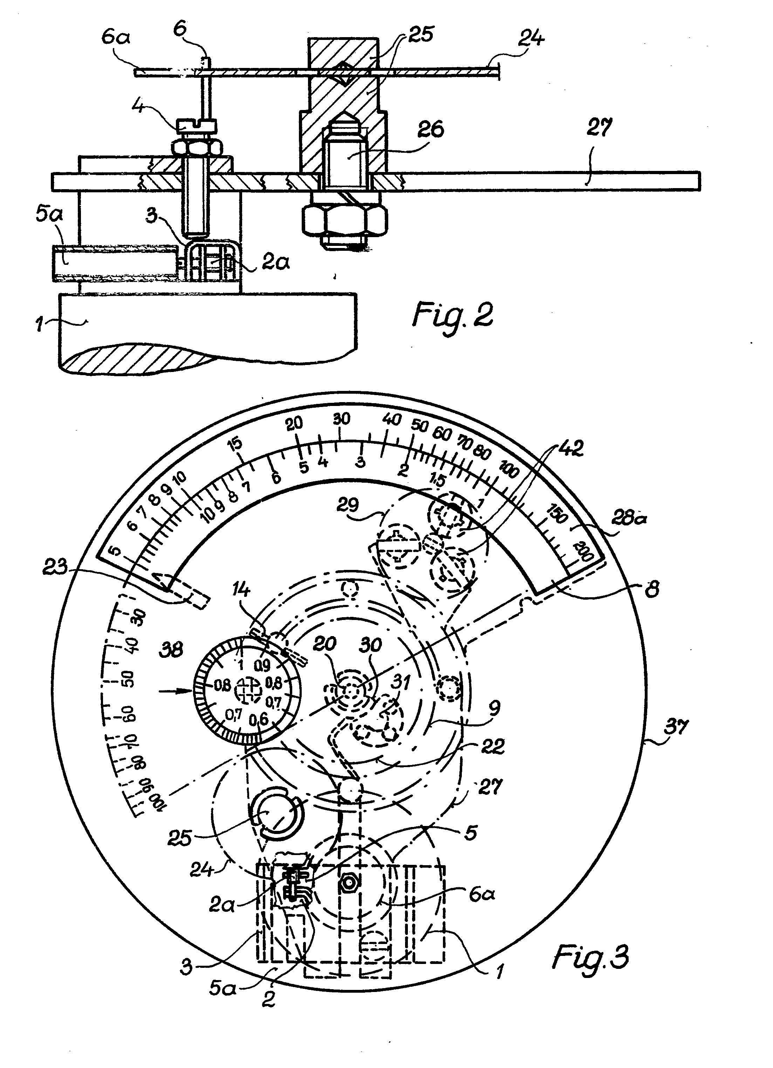

The instrument can be produced with use of the kilometre counter speedometer 1 used in the motor vehicles, which is driven from the gear box through the driving shaft 1a of the speedometer,
at which a coil spring functioning according to
logarithmic characteristic curve is used in
place of spring  giving the restoring torque
of the flexible shaft connected with the speedome-
ter pointer /Fig.1./. The spring 2 with stems
2a of the annular casing is placed into the U-
shaped trough 3 fixed with screw 4 /Fig.2./. The
coil spring can be calibrated even in the assembled
condition of the instrument by varying the characteristic curve with screw 5, which is adjustable from the outside with the screwdriver
through tube 5a /Fig.3./. This way the speedometer can be calibrated subsequently even if its
magnetic force should weaken during the usage,
which at the present can be repaired only by re-
magnetization or replacement of the speedometer
spring. Gear 6a is fitted to the shaft 6 of the
kilométre counter in place of the pointer, the
tooth number and circle of engagement  can be
calculated according to the gear ratio of the
counter.

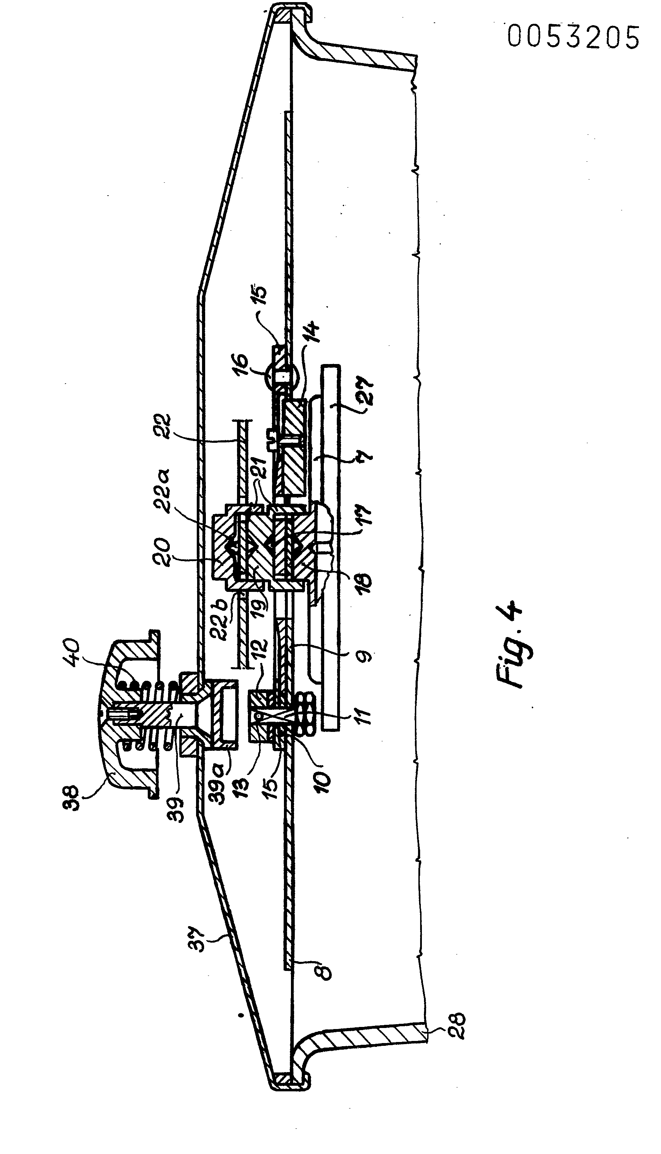

The other important part is the instrument
7 measuring the varying amount of the fuel. A
blade is turned at $120^o$ with the pressure brought about by reducing the flow cross-section of the fuel conducted in through pipe 7a and forwarded through pipe 7b connected to the instrument. The blade turns in proportion with the flow rate of the fuel, the pointer of which is replaced by a rotary disc 8 with gear 9, engaged with gear 10 at a ratio of 9:1 /Figures 3 and 4/. Rotary disc 3 has a logarithmically graduated scale, which in accordance with the specific weight of the fuel accurately shows the fuel consumption in litre or kp units of measure according to the adjustment transmitted by turn of geaß 10.

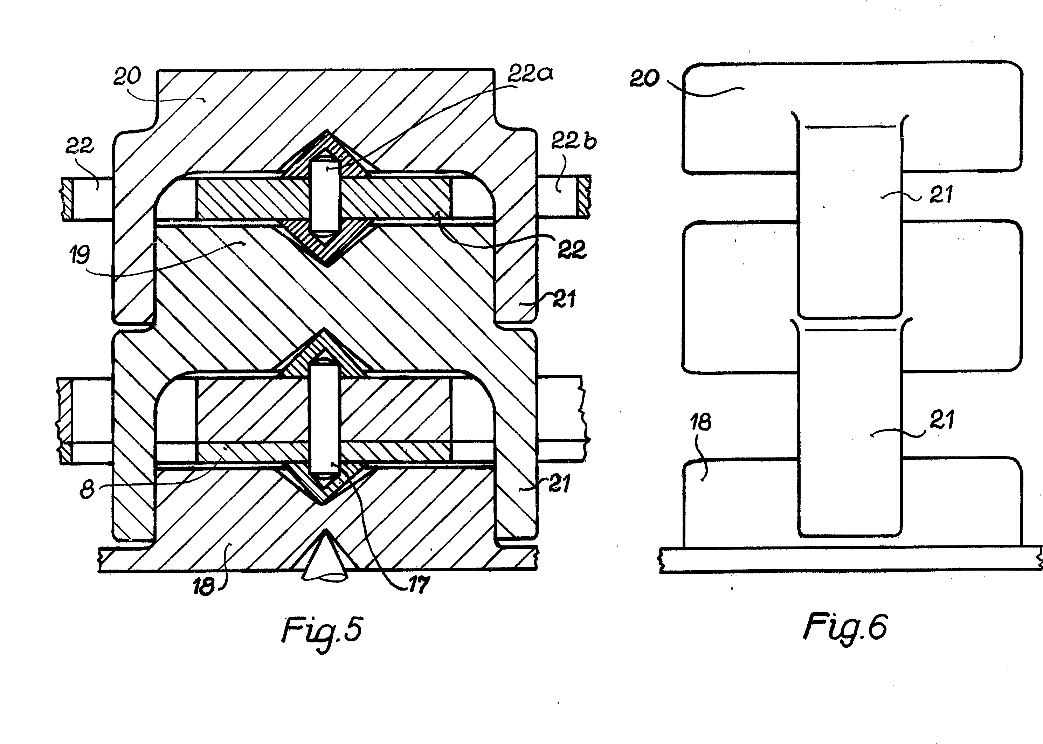

The gear 10 is mounted on the square-shaped pin 11, onto which the driving ring 12 is fixed with bolt 13. Pin 11 is rotatably fixed in the hole through disc 8. The mild steel magnet block 14 is fixed on gear 9, on which the instrument 7 measuring the amount of fuel turns the gear 9 with the magnetic line of force. Gears 9 and 10 are surrounded from above by flanged disc 15 with the scale disc 5, disc 15 is fixed to the scale disc with rivets 16 in such a way that the surrounded gears 9 and 10 should remain rotatable /Fig.4./. Disc 8 in this assembled condition is to be statically balanced. Disc 8 with the tapered

(journalled)

shaft 17 is embedded in the conical bearing housings 18 and 19, which with the upper bearing 20 are held together by lugs 21, or by a flexible, so-called snap fastener coupling (Figures 5 and 6). In the latter bearing housing the kilometre wheel 22 is carried with its tapered pin 22a. The bearing supported parts turn at $120°$, which is made possible - as the path of motion of lugs 21 by the circular openings 22b in gear disc 22 and by the similar openings in gear disc 9. The gear 22 of the kilometre pointer embedded in bearings 19 and 20 rotates coaxially and independently from disc 8 with slight friction around its pointed shaft 22. Pointer 23 is fixed to gear 22. The gear 6a of the kilometre counter is connected through gear 24 with the gear 22 of identical size, which gear 24 rotates with its tapered pin in bearing 25, which is fixed to plate 27 with screw 26 allowing the adjustment of the gears in relation to each other /Fig.2./.

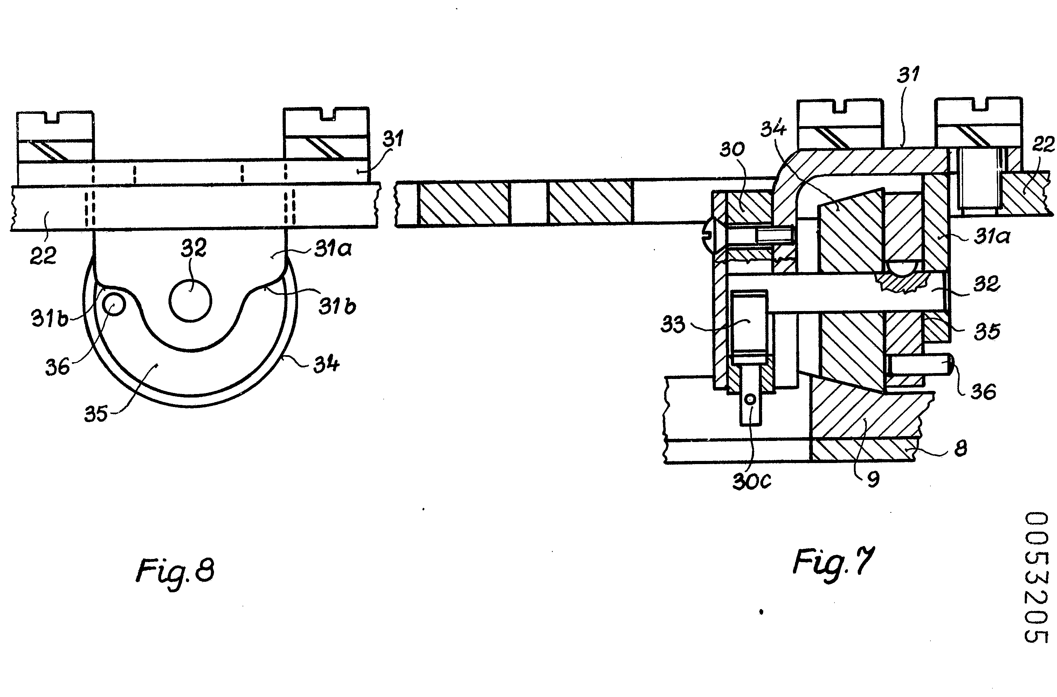

Plate 27 is provided with an opening to receive the instrument 7 showing the varying amount of fuel, and embracing fork-like arms, and the plate is fastened to the holder formed on the speedometer 1, whereby the two instruments

are in a fixed position in relation to each other.
In addition, the instruments 1 and 7 are fixed
with screws to the bottom of the instrument
housing 28. Furthermore the lamp socket 29 is
also fastened to the bottom of instrument housing
28, in which socket three incandescent lamps of
different colours, e.g. red-white-green are
emplaced. The cables of the tree incandescent
lamps passing below plate 27 are connected with
a three-way switch 30 in which the wires are
soldered to the horizontal 30a and 30b and to
the rectangular lower contact outlet terminals
30e of the insulated ring distributor /Figures
7, 8 and 9/. The switch 30 with the insulated
ring distributor is mounted on the rectangular
plate 31, onto which the plate 31a is riveted
and pin 32 is embedded in the holes. The plate
brush 33 is arranged in the split shaft end of
pin 32, and a friction bevel wheel 34 is rotatab-
ly mounted between the two bearing-supported parts
of the shaft, the end side of its thicker part
rubbing to disc 35, which is tightly fitted or
wedged on pin 32. Stop pin 36 is fixed in disc 35,
in order to prevent the turn of shaft 32 in excess
of $180^{\circ}$ by impact upon the plate end walls 31b extending as the end part of the semi-circularly machined part around the bearing hole of plate 31a /Fig.8/. The rectangular plate 31 is fixed with screws to the gear 22, to the so-called kilometre wheel, in which is to be statically balanced in its condition equipped with the switch and pointer 23.

The friction bevel wheel 34 rolls on the sloping surface of the hub part of the large gear 9 on disc 8. In case of difference in the relative forward or backward motion of the disc 8 and pointer carrying kilometre wheel 22 -due to deviation of the rotation velocities - then the friction bevel wheel 34 rotates and with its pressure friction axially acting on the disc 35, turns the shaft 32. The stop pin fitted disc 35 rotates with the shaft into one of the extreme rotary positions limiting the machined part of plate 31a with the extensions 31b on both sides, when the plate brush 33 co-rotating with the shaft switches on the circuit of one of the two extreme, e.g. green or red incandescent lamps. In case of co-rotation of the scale disc 8 and kilometre wheel 22, as well as at movement-change the friction bevel wheels stops, disc 35 with stop pin 36

remains in the position between stops 31b and limits the turn and in this case contact 30c of the circuit wire of the white bulb in the middle of plate brush 33 is switched on /position according to Fig.7./. The negative branch of the circuit is formed by the instrument, or motor body.

The logarithmic scale 28a of $120^o$ arc length showing the speed, graduated between the 5 - 200 km/h limits is mounted and fixed to the instrument housing 28. The pointer 23 does not indicate the travelling speed below 5 km/h, because the lugs 21 extending into the openings 22b from the bearing of the kilometre wheel 22 carrying the pointer limit the rotation of the wheel, prevent the rotation below and in excess of the scale, and thus the turn together with the pointer 23 can begin only at speed higher than 5 km/h.

The knob 38 setting the specific weight of the fuel is mounted on the plate 37 covering the whole instrument, and it is cut out only along the arc length of the scale, each half of the circumference of the edge is provided with scale divisions showing the values of specific

weight between 0.6 - 1.0 limits in litre and kp /Figures 3 and 4./.

The sca.e division on knob 38 is set over the division ending with arrow on plate 37 to the value of the fuel specific weight acquired at the petrol station in stationary state of the motor. The specific weight is set by turn of the knob 38 while being pressed. The gear 10 setting the specific weight by its turn, together with the driving ring 12 fixed on the square pin 11 rotates with disc 8 during run of the motor and progress of the vehicle, but the knob 38 returns to its initial position coinciding with the axis of rotation in stationary position of the motor. Knob 38 with shaft 39 is embedded in plate 37 and by pressing it down against the supporting spring 40, the hollow head 39a fitted to the shaft end 39 can be pushed onto the driving ring 12 and knob 38 with its turn according to the scale division corresponding to the specific weight of the fuel rotates the  gear 10, which through the gear 9 sets the logarithmically graduated disc 8 according to the specific weight. During travel the turn of gear 10 and driving ring 12 as well as maladjustment of disc 8 are prevented by the adhesion of the large bearing surface between the large gear 10 and disc. Knob 38 is secured in its position by spring 40 pulling it into its tapered housing.

Besides the above-described scale adjusting device according to the specific weight of the fuel, a thermostat is used in the instrument unit 7 measuring the flow rate of the fuel, which senses the temperature and viscosity of the fuel conducted into pipe 7a and through 7b. This thermostat performs an automatic adjustment following the temperature and viscosity variation of the fuel in such a way that the spring of the thermostat varies the flow cross-section along the blade rotated by the pressure of the fuel flow, with the aid of a control plate. Consequently the blade and with it the logarithmically graduated scale disc 8 will turn in proportion with the amount of fuel flowing through the opening controlled according to the temperature and viscosity variations.

The structural parts of the instrument, except for the mild steel magnet 14, shall be produced with the use of coloured and non-magnetizable materials.

The scale divisions and signal lamps 42 are

**Visible** through the window 41 in cover plate 37.

The instrument including its described structural parts forms a unit arranged in the instrument housing 28, which can be mounted into the instrument board in place of the kilometre indicators used in the motor vehicles. Besides the speedometer the kilometre counter too can be arranged in the instrument housing and the kilometre counter too can be operated from its driving shaft, for the reading of which a window is formed on the cover of the instrument housing.

The existing and known suitable Odometer or /kilometre counter-combined speedometer can also be used for the instrument in such a way that an adjustable coil spring with variable tensioning and characteristic curve functioning according to logarithmic characteristic curve - being a novel solution in itself - is used as the restoring device of the speedometer pointer.

The instrument according to the invention is suitable for reducing the well known air polluting effect of motor vehicles. The regulations concerning the reduction of air pollution

require very complicated, expensive measuring

0053205

instruments, and because of this, for the time being they can be checked generally and practically only in the manufacturing works under laboratory conditions, at the same time the operators and drivers of the motor vehicles do not know the extent of air pollution caused by the motor vehicles used by them. The amount of poisonous exhaust gases of carbonmonoxide and hydrocarbon content due to overfeeding of the fuels can be reduced by adjusting with the instrument the economical fuel consumption most suitable for the operating conditions of the motor vehicles.

Usefulness of the instrument in respect of the general economy is increased by the economic reasons arising from the continual rise of the fuel price. Considerable reduction of the economic and controlled fuel consumption can be attained by the accurate adjustment of the carburetters, which are easily checked with the instrument. Consumption of the motors at idle run can also be checked with the instrument to be read off the scale showing the amount of litre/hour.

By indicating the excess fuel consumption, the instrument calls the attention of the driver to unnoticed faults such as pulled-in handbrake, fuel leakage, ignition failure etc., moreover to other disorders as malfunction of valves, burning, cessation of cooling water circulation due to broken V-belt, etc.

CLAIMS

1. Instrument for measuring the speed and fuel consumption of motor vehicles, characterized in that it has a speedometer operated with coil spring /2/ of logarithmic characteristic curve and logarithmically graduated speedometer scale /28a/, furthermore a device /7/ measuring the consumed fuel in its through-flow, the amount of which is shown by the logarithmically graduated scale /8/ turning along the speedometer scale /28a/, and the speed pointer /23/ indicating the jointly evaluated numerical data of the speed and fuel consumption of the vehicle is in mobile arrangement over the two scales.

2. Embodiment of the instrument as claimed in claim 1., characterized in that it is provided with a device /38-40/ between the fuel metering device /7/ and scale disc /8/ showing the quantitative data for input of the specific weight data influencing the measurement of the fuel to be consumed.

3. Embodiment of the instrument as claimed in claim 1 or 2., characterized in that a thermostat is in the fuel metering device /7/ sensing

the temperature and viscosity of the flowing fuel, said thermostat having a connection actuating the control device of the fuel through-flow.

4. Embodiment of the instrument as claimed in claim 1., 2 or 3, characterized in that the rotary motion transmitting devices /22,9/ of the scale disc /8/ showing the amount of consumed fuel and speed pointer /23/ showing the progress of the vehicle are arranged coaxially and in bearings /18-20/.

5. Embodiment of the instrument as claimed in claim 4., characterized in that the bearings /18-20/ are held together with lugs /21/ functioning as snap fasteners, for which openings /22b/ are formed in the discs of the rotary motion transmitting devices /22,9/ of the pointers.

6. Embodiment of the instrument as claimed in any preceding claim, characterized in that the characteristic curve of the coil spring /2/ giving the counter torque of the speedometer is variable and thereby the pointer is adjustable according to the scale division /28a/ of the speedometer, for which purpose it is provided with an adjusting screw /5/ accessible from outside of the instrument and a guide sleeve /5a/ for the turning device.

7. Embodiment of the instrument as claimed in any of claims 1 - 6., characterized in that a wheel /34/ is inserted between the rotary parts /22,9/ of the speedometer and fuel meter /7/ rotatable by their relative motion and angular displacement difference, said wheel having a device /33/ actuating a current switching gear.

8. Embodiment of the instrument as claimed in any of claims 1 - 7., characterized in that a light and/or sound signal device /29,42/ is provided between the rotary parts /22,9/ of the speedometer and fuel meter, indicating the difference or equality of the relative angular displacement, i.e. deviation of the turning speed.

----------------------------

0053205

Fig. 1

Fig. 2

Fig. 3

0053205

Fig. 4

Fig.6

Fig.5

Fig. 8

Fig. 7

Fig. 9

Fig. 10

0053205

| Category | Citation of document with indication, where appropriate, of relevant passages | Relevant to claim |
|---|---|---|
| | **DOCUMENTS CONSIDERED TO BE RELEVANT** | |
| X | DE - C - 842 122 (H. DOLZ) <br> * Page 2, lines 12-83; figure 1 * | 1,4 |
| X | DE - A - 1 950 864 (BOSCH) <br> * Whole document * | 1,4 |
| | FR - A - 1 449 488 (CONTACTROL LTD) <br> * Page 2, column 2, lines 41-51; figures 1,2 * | 3 |
| | GB - A - 738 496 (F. PERROTTI et al.) <br> * Page 2, line 21 - page 3, line 13; figures 1,2 * | 7 |
| | US - A - 4 135 405 (J. FUKUYO et al.) <br> * Column 2, line 32 - column 3, line 17; figures 1-3 * | 8 |
| | US - A - 4 136 562 (C.M. CROOKER) <br> * Whole document * | 8 |

**CLASSIFICATION OF THE APPLICATION (Int. Cl.)**

G 01 P 1/08
G 01 D 1/16
G 01 F 9/02

**TECHNICAL FIELDS SEARCHED (Int Cl)**

G 01 P 1/08
G 01 D 1/16
G 01 F 9/02

**CATEGORY OF CITED DOCUMENTS**

X: particularly relevant

A: technological background

O: non-written disclosure

P: intermediate document

T: theory or principle underlying the invention

E: conflicting application

D: document cited in the application

L: citation for other reasons

&: member of the same patent family, corresponding document

The present search report has been drawn up for all claims

| Place of search | Date of completion of the search | Examiner |
|---|---|---|
| The Hague | 29-07-1981 | HANSEN |

EPO Form 1503.1   06.78